# EUROPÄISCHE PATENTSCHRIFT

(11) **EP 0 740 992 B1**
(45) Veröffentlichungstag und Bekanntmachung des Hinweises auf die Patenterteilung: **20.03.2002**
(21) Anmeldenummer: 96250098.9
(22) Anmeldetag: 26.04.1996
(51) Int. Cl.: B29C 45/50

(54) **Kunststoffspritzgiessmaschine mit Rotations- und Linearantrieb**
Plastic injection moulding machine with rotational and linear drive
Machine à mouler par injection des matières plastiques avec entraînement rotatif et linéaire

(30) Priorität: 05.05.1995 DE 19517582
(43) Veröffentlichungstag der Anmeldung: 06.11.1996
(73) Patentinhaber: Demag Ergotech GmbH, 90571 Schwaig (DE)
(72) Erfinder: Würl, Ernst, 91798 Höttingen (DE); Schreiner, Helmut, Dipl.-Ing., 90411 Nürnberg (DE)
(74) Vertreter: Meissner, Peter E., Dipl.-Ing.

(56) Entgegenhaltungen:
- DE-A- 3 431 382
- DE-A- 4 228 599
- FR-E- 86 557
- PATENT ABSTRACTS OF JAPAN vol. 012, no. 014 (M-659), 16.Januar 1988 & JP 62 173230 A (TOYO KIKAI KINZOKU KK), 30.Juli 1987,
- DESIGN ENGINEERING, Mai 1981, LONDON, Seiten 37-45, XP002029635 "proportional and digital hydraulics for injection moulding control"
- PATENT ABSTRACTS OF JAPAN vol. 014, no. 056 (M-0929), 31.Januar 1990 & JP 01 281913 A (TOSHIBA MACH CO LTD), 13.November 1989,

## Beschreibung

Die Erfindung betrifft eine Kunststoffspritzgießmaschine mit Rotations- und Linearantrieb gemäß dem Oberbegriff des Patentanspruchs 1.

Eine derartige Kunststoffspritzgießmaschine ist aus der DE 34 31 382 A1 bekannt.

Aus DE 39 37 099 ist eine Kunststoffspritzgießmaschine bekannt, bei der ein gemeinsamer elektrischer Antriebsmotor vorgesehen ist, von welchem während des Plastifizierens des Kunststoffgranulats die Schnecke in Rotation versetzt wird und danach von diesem Antriebsmotor die Einspritzeinheit um den Spritzhub in Richtung der Austragsöffnung gepreßt wird. Bei der bekannten Vorrichtung sind der Rotationsantrieb und der Einspritzantrieb über ein Wechselgetriebe an einem beiden gemeinsamen Antriebsmotor angeschlossen. Um die Linearbewegung nach der Rotationsbewegung durchführen zu können, findet eine im Getriebe vorgesehene Kupplung Verwendung, die die Druckmittelpumpe vom Antriebsmotor abkuppelt.

Nachteiligerweise wird bei Betrieb des Antriebsmotors das Getriebe teilweise weiter betrieben. Darüber hinaus ist die in einem offenen Hydraulikkreis vorgesehene Pumpe nur in einer Richtung antreibbar.

Aus DE 38 09 792 A1 ist ein Verfahren und eine Vorrichtung zum Spritzgießen von relativ große Dicke aufweisenden Kunststofferzeugnissen bekannt, mit einem hydraulischen Linearantrieb und einem hydraulischen Rotationsantrieb, die von einer gemeinsamen Ölpumpe angetrieben werden.

In nachteiliger Weise wird bei der bekannten Einrichtung die Rotationsbewegung von einem nur eine Drehrichtung aufweisenden Druckölmotor durchgeführt, der in einem offenen Hydrauliksystem angeordnet ist. Darüber hinaus wird der rotationsmäßig betriebene Druckölmotor abgeschaltet, wenn die Schnecke über die vorgegebene Hubstrecke hin und her bewegt wird.

Aufgabe der Erfindung ist es, für eine Kunststoffspritzgießmaschine einen konstruktiv einfachen Antrieb über die lineare und rotatorische Bewegung der Schnecke zu schaffen, die einen lärmarmen und energiesparsamen Betrieb gewährleistet.

Die Erfindung erreicht dieses Ziel durch die kennzeichnenden Merkmale des Anspruches 1. Die folgenden Ansprüche zeigen vorteilhafte Weiterbildungen.

Die Erfindung weist für die lineare und die rotatorische Bewegung einen gemeinsamen servoelektrischen Antriebsmotor auf, der mindestens für die Linearbewegung an eine Hydraulikpumpe gekoppelt ist, die im geschlossenen Kreis drehrichtungsabhängig die Linearbewegung der Schnecke durchführt. Die Linearbewegung der Schnecke wird vorzugsweise über einen Gleichgangszylinder durchgeführt. Der Einspritzvorgang läuft abhängig von der Dreh- bzw. Förderrichtung der Pumpe für den Linearbetrieb der Schnecke ab. Die Rotationsbewegung der Schnecke erfolgt durch einen hydraulischen Antrieb.
Beim hydraulischen Rotationsantrieb kommt ein Hydraulikmotor zum Einsatz, der während des Betriebes hydraulisch vom Antriebsmotor trennbar ist. Zum vollständigen Lösen ist eine mechanische Trennkupplung vorgesehen.

In der vorliegenden Erfindung ist neben dem Betrieb entweder Linearantrieb oder Rotationsantrieb auch ein paralleler Betrieb möglich. Darüber hinaus sind sämtliche Bewegungsrichtungen sowohl linear wie rotatorisch einstellbar. Der geschlossene hydraulische Kreis ist dabei reversierend betreibbar. Durch den Antrieb in zwei Drehrichtungen der Pumpe ist die Funktionszuordnung einerseits für das Einspritzen der Schnecke, andererseits für die Rotation der Schnecke zum Fördern gegeben. Diese kann jedoch zusätzlich wegen des parallelen Anschlußes der beiden Verbraucher hydraulisch getrennt werden.

Im Antrieb für die Linearbewegung der Schnecke ist ein Proportional-Druckventil vorgesehen. Bei dem hydraulischen Rotationsantrieb ist bei der für die Rotation gleichzeitig erforderliche Gegenkraft zum Aufbau des Staudruckes im Schneckenvorraum ein elektronisch programmierbares Druckventil zwischen den beiden Kolbenflächen des Gleichgangzylinders vorgesehen, um das überströmende Medium druckabhängig zu beeinflußen.

Der hydraulisch-hydraulische Antrieb für die Rotation wie auch die Linearbewegung ist in seinem Aufbau einfach, er besitzt nur wenige Elemente und ist dadurch durch einfache Kapselung der Aggregate gegen Geräuche leicht abschirmbar. Darüber hinaus ermöglicht diese Ausführungsform eine einfache Kapselung der Aggregate gegen Leckage.

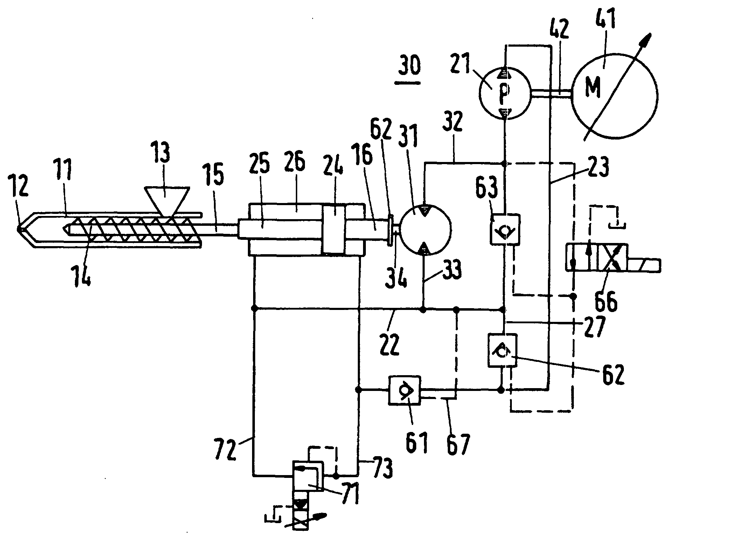

Ein Beispiel der Erfindung ist in der beiliegenden Zeichnung dargelegt.

Die Figur zeigt eine Spritzgießmaschine mit einem Spritzzylinder 11, der eine Austragsöffnung 12 sowie einen Aufnahmebehälter 13 aufweist und in dem eine Schnecke 14 angeordnet ist. Die Schnecke 14 ist an eine Kolbenstange 25 angeschlossen, die gleichzeitig als Antriebswelle 15 dient.

Die Kolbenstange 25 ist mit einem Kolben 24 eines Gleichgangzylinders für den Linearbetrieb angeschlossen.

Der Kolben 24 ist in einem Zylinder 26 angeordnet, der über die Hydraulikleitung 22 und 23 eines geschlossenen Hydraulikkreises mit einer Druckmittelpumpe 21 verbunden ist.

In der Leitung 23, die mit dem Hydraulikraum des Linearantriebs zum Vorwärtsbewegen der Schnecke 14 in Verbindung steht, ist ein entsperrbares Rückschlagventil 61 angeordnet.

Die Leitungen 22 und 23 sind über eine Verbindungsleitung 27, in der ein entsperrbares Rückschlagventil 62 vorgesehen ist, miteinander verbunden.

Die Druckmittelpumpe 21 ist über eine Antriebswelle 42 mit einem Antriebsmotor 41 verbunden, der als Servomotor ausgebildet ist.

Der Zylinder 26 des Linearantriebs ist durch eine Vorlaufleitung 73 und eine Rücklaufleitung 72 mit einem elektrisch programmierbaren Proportionaldruckventil 71 verbunden.

In der Figur zweigt von der Vorlaufleitung 22 eine Zufuhrleitung 32 zu einem hydraulischen Motor 31 ab, deren Abfuhrleitung 33 wiederum mit der Vorlaufleitung 22 verbunden ist. In der Vorlaufleitung 22 ist ein entsperrbares Rückschlagventil 63 vorgesehen, das mit einem Steuerventil 66 in Verbindung steht. Die Druckmittelmotor 31 besitzt eine Abtriebswelle 34, die mit einer Kupplung 52 mit der Kolbenstange 25 als motorseitige Antriebswelle 16 mit dem Kolben 24 des Linearantriebs in Verbindung steht. In der hydraulischen Rückleitung 23 zwischen dem Zylinder 26 des Linearantriebs und der Druckmittelpumpe 21 ist ein schaltbares Rückschlagventil 61 vorgesehen, daß bei Ansteuerung sich öffnet. In der Verbindungsleitung 27 ist ein steuerbares Rückschlagventil 62 vorgesehen, daß bei Ansteuerung geschlossen wird. Das steuerbare Ventil 61 und 62 ist durch eine Steuerleitung 67 mit der Abfuhrleitung 22 verbunden.

In der hydraulischen Leitung 22 des geschlossenen Hydraulikkreises, die die Druckmittelpumpe 21 mit dem Zylinder 26 des Linearantriebs verbindet, ist ein steuerbares Rückschlagventil 63 vorgesehen. Die Rückschlagventile 62 und 63 sind steuerseitig mit einem Steuerventil 66 verbunden. In der Schließstellung des Rückschlagventils 63 wird der Motor 31 vom Öl durchströmt. Ausgangsseitig ist in der Abfuhrleitung 33 relativ geringer Druck, der auf die Steuerleitung 67 wirkt mit der Folge, daß das steuerbare Rückschlagventil 61 geschlossen bleibt. Wird in einer anderen Arbeitsstellung durch das Steuerventil 66 das steuerbare Rückschlagventil 63 geöffnet und das steuerbare Rücklaufventil 62 geschlossen, so baut sich in der hydraulischen Leitung 22 und in der Abfuhrleitung 33 und somit auch in derSteuerleitung 67 ein höherer Druck auf mit der Folge, daß das steuerbare Ventil 61 geöffnet wird. In dieser Betriebsphase wird die Schnecke linear durch die Kolbenzylindereinheit 21, 26 bewegt.

### Positionsliste

### Spritzgießmaschine

- 11: Spritzzylinder
- 12: Austragsöffnung
- 13: Aufnahmebehälter
- 14: Schnecke
- 15: Antriebswelle schneckenseitig
- 16: Antriebswelle motorseitig

### Linearantrieb

- 21: Druckmittelpumpe
- 22: Hydraulische Leitung zurück
- 23: Hydraulische Leitung vor
- 24: Kolben
- 25: Kolbenstange
- 26: Zylinder
- 27: Verbindungsleitung

- 30: Rotationsantrieb
- 31: Hydraulischer Antrieb, Motor
- 32: Zufuhrleitung
- 33: Abfuhrleitung
- 34: Abtriebswelle

### Antrieb

- 41: Antriebsmotor
- 42: Antriebswelle Hydraulikmotor

### Rückschlagventile

- 61: schaltbares Rückschlagventil 23
- 62: schaltbares Rückschlagventil Verbindungsleitung 27
- 63: schaltbares Rückschlagventil 22
- 66: Steuerventil 63, 62
- 67: Steuerleitung

### Druckbegrenzung

- 71: Proportional-Druckventil
- 72: Druckzuleitung
- 73: Druckableitung

## Patentansprüche

1. Kunststoffspritzgießmaschine mit einer in einem Spritzzylinder angeordneten Schnecke, die angetrieben durch einen alleinigen Motor von einem Linearantrieb und einem Rotationsantrieb bewegt wird, wobei
- der Antriebsmotor (41) ein Servomotor ist,
- der Linearantrieb eine von einer mit dem Antriebsmotor (41) verbundene Druckmittelpumpe (21) in einem geschlossenen die Leitungen (22, 23) aufweisenden Hydraulikkreis bewegte Kolben-Zylinder-Einheit (24, 26) ist, und
- die Schnecke (14) eine Antriebswelle (15) besitzt, an die der mit dem Antriebsmotor (41) in Verbindung stehende Rotationsantrieb (30) angreift und
der Rotationsantrieb (30) ein hydraulischer Antrieb ist mit einen Motor (31), der eine mit der Kolbenstange (25) korrespondierende Motorabtriebswelle (34) aufweist,
**dadurch gekennzeichnet,**
**dass** der Motor (31) über eine Zufuhrleitung (32) und einer Abfuhrleitung (33) mit der Vorlaufleitung (22) verbunden ist und
**dass** in der Vorlaufleitung (22) ein entsperrbares Rückschlagventil (63) vorgesehen ist, das durch ein Zwei-Wege-Ventil (66) steuerbar ist.

2. Kunststoffspritzgießmaschine nach Anspruch 1,
**dadurch gekennzeichnet,**
**dass** in der den Zylinder (26) des Linearantriebs mit der Druckmittelpumpe (21) verbindungen Leitung (23) ein Rückschlagventil (61) vorgesehen ist.

3. Kunststoffspritzgießmaschine nach Anspruch 1,
**dadurch gekennzeichnet, dass** die Vorlaufleitung (23) und die Rücklaufleitung (22) über eine Verbindungsleitung (27) verbunden sind, in der ein Rückschlagventil (62) vorgesehen ist.

4. Kunststoffspritzgießmaschine nach den Ansprüchen 2 und 3,
**dadurch gekennzeichnet,**
**daß** die Rückschlagventile (61, 62) bei dem mechanischen Rotationsantrieb über eine Zuleitung (67) mit einem Zwei-Wege-Ventil (65) verbunden sind, dessen Ableitung (68) an die Vorlaufleitung (22) angeschlossen ist.

5. Kunststoffspritzgießmaschine nach den Ansprüchen 2 und 3,
**dadurch gekennzeichnet,**
**daß** das Rückschlagventil (61) bei dem hydraulischen Rotationsantrieb über die Zuleitung (67) unmittelbar mit der Abfuhrleitung (33) verbunden sind.

6. Kunststoffspritzgießmaschine nach Anspruch 1,
**dadurch gekennzeichnet, daß** an dem Zylinder (26) des Linearantriebs ein Proportionaldruckventil (71) angeschlossen ist.

7. Kunststoffspritzgießmaschine nach Anspruch 1,
**dadurch gekennzeichnet, daß** der Linearantrieb eine aus mindestens einem Gleichgangzylinder bestehende Kolbenzylindereinheit (24, 26) ist.

8. Kunststoffspritzgießmaschine nach Anspruch 7,
**dadurch gekennzeichnet,**
**daß** die Kolbenzylindereinheit (24, 26) über ein Joch (17) bzw. über ein Gegenjoch (18) mit dem Spritzzylinder (11) sowie der schneckenseitigen Antriebswelle (15) verbunden ist.

9. Kunststoffspritzgießmaschine nach Anspruch 1,
**dadurch gekennzeichnet,**
**daß** zwischen der Motorabtriebswelle (34) und der Kolbenstange (25) eine Kupplung (52) angeordnet ist.

## Claims

1. Plastics injection moulding machine having a screw which is arranged in an injection cylinder and, driven by a single motor, is moved by a linear drive and a rotary drive,
wherein
- the driving motor (41) is a servo motor,
- the linear drive is a piston-cylinder unit (24, 26) which is moved by a hydraulic pump (21), which is connected to the driving motor (41), in a closed hydraulic circuit which has lines (22, 23) and
- the screw (14) has a drive shaft (15) which is acted upon by the rotary drive (30) connected to the driving motor (41) and
- the rotary drive (30) is a hydraulic drive with a motor (31) which has a driven motor shaft (34) corresponding with the piston rod (25),
**characterised in that**
the motor (31) is connected to the forward-flow line (22) via a feed line (32) and an outlet line (33) and
**in that** a releasable check valve (63), which is controllable by a two-way valve, is provided in the forward-flow line (22).

2. Plastics injection moulding machine according to claim 1,
**characterised in that**
a check valve (61) is provided in the line (23) connecting the cylinder (26) of the linear drive to the hydraulic pump (21).

3. Plastics injection moulding machine according to claim 1,
**characterised in that**
the forward-flow line (23) and the return flow line (22) are connected via a connection line (27) in which a check valve (62) is provided.

4. Plastics injection moulding machine according to claims 2 and 3,
**characterised in that**
in the case of the mechanical rotary drive, the check valves (61, 62) are connected via a feed line (67) to a two-way valve (65), the outlet line (68) of which is connected to the forward-flow line (22).

5. Plastics injection moulding machine according to claims 2 and 3,
**characterised in that**
in the case of the hydraulic rotary drive, the check valve (61) is connected via feed line (67) directly to the outlet line (33).

6. Plastics injection moulding machine according to claim 1,
**characterised in that**
a proportional pressure-control valve (71) is connected to the cylinder (26) of the linear drive.

7. Plastics injection moulding machine according to claim 1,
**characterised in that**
the linear drive is a piston-cylinder unit (24, 26) comprising at least one synchronous cylinder.

8. Plastics injection moulding machine according to claim 7,
**characterised in that**
the piston-cylinder unit (24, 26) is connected by means of a yoke (17) or by means of a counter-yoke (18) to the injection cylinder (11) and to the screw drive shaft (15).

9. Plastics injection moulding machine according to claim 1,
**characterised in that**
a coupling (52) is arranged between the driven motor shaft (34) and the piston rod (25).

## Revendications

1. Machine de coulée par injection de matière synthétique, comportant une vis sans fin agencée dans un cylindre d'injection, qui, entraînée par un moteur unique, est déplacée par un entraînement linéaire et un entraînement en rotation,
- le moteur d'entraînement (41) étant un servomoteur,
- l'entraînement linéaire étant un vérin (24, 26) déplacé par une pompe à agent sous pression (21) reliée au moteur d'entraînement (41) dans un circuit hydraulique fermé présentant les conduits (22, 23), et
- la vis sans fin (14) possédant un arbre d'entraînement (15) sur lequel s'engage l'entraînement en rotation (30) relié au moteur d'entraînement (41), et
- l'entraînement en rotation (30) étant un entraînement hydraulique ayant un moteur (31) qui présente un arbre de sortie (34) correspondant à la tige de piston (25),
**caractérisée en ce que** le moteur (31) est relié, par l'intermédiaire d'une liaison d'amenée (32) et d'une liaison d'évacuation (33), au conduit d'aller (22), et **en ce que**, dans le conduit d'aller (22), il est prévu une valve de retenue à double clapet (63) qui peut être commandée par une valve à deux voies (66).

2. Machine de coulée par injection de matière synthétique selon la revendication 1,
**caractérisée en ce qu'**une valve anti-retour (61) est prévue dans le conduit (23) relié à la pompe à agent sous pression (21) dans le cylindre (26) de l'entraînement linéaire.

3. Machine de coulée par injection de matière synthétique selon la revendication 1,
**caractérisée en ce que** le conduit d'aller (23) et le conduit de retour (22) sont reliés par l'intermédiaire d'un conduit de liaison (27) dans lequel il est prévu une valve anti-retour (62).

4. Machine de coulée par injection de matière synthétique selon les revendications 2 et 3,
**caractérisée en ce que** les valves anti-retour (61, 62) lors de l'entraînement en rotation mécanique sont reliées, par l'intermédiaire d'une liaison (67), à une valve à deux voies (65), dont la liaison de sortie (68) est raccordée au conduit d'aller (22).

5. Machine de coulée par injection de matière synthétique selon les revendications 2 et 3,
**caractérisée en ce que** la valve anti-retour (61), lors de l'entraînement en rotation hydraulique, est reliée par la liaison (67) directement à la liaison d'évacuation (33).

6. Machine de coulée par injection de matière synthétique selon la revendication 1,
**caractérisée en ce qu'**une valve de pression proportionnelle (71) est raccordée au cylindre (26) de l'entraînement linéaire.

7. Machine de coulée par injection de matière synthétique selon la revendication 1,
**caractérisée en ce que** l'entraînement linéaire est un vérin (24, 26) constitué d'au moins un cylindre synchrone.

8. Machine de coulée par injection de matière synthétique selon la revendication 7,
**caractérisée en ce que** le vérin (24, 26) est relié, par l'intermédiaire d'une culasse (17) ou par l'intermédiaire d'une contre-culasse (18), au cylindre d'injection (11) ainsi qu'à l'arbre d'entraînement (15) du côté de la vis sans fin.

9. Machine de coulée par injection de matière synthétique selon la revendication 1,
**caractérisée en ce qu'**un accouplement (52) est agencé entre l'arbre de sortie du moteur (34) et la tige de piston (25).
